Europäisches Patentamt

(19) European Patent Office

Office européen des brevets

(11) Numéro de publication: **0 030 194**
**B1**

(12) **FASCICULE DE BREVET EUROPEEN**

(45) Date de publication du fascicule du brevet: **14.12.83**

(51) Int. Cl.³: **H 04 B 12/02**

(21) Numéro de dépôt: **80401709.3**

(22) Date de dépôt: **28.11.80**

(54) Etage prédicteur pour système de compression de débit numérique.

(30) Priorité: **30.11.79 FR 7929471**

(43) Date de publication de la demande:
**10.06.81 Bulletin 81/23**

(45) Mention de la délivrance du brevet:
**14.12.83 Bulletin 83/50**

(84) Etats contractants désignés:
**AT BE CH DE GB IT LI LU NL SE**

(56) Documents cités:
GB - A - 1 469 102

ELECTRONICS AND COMMUNICATIONS IN
JAPAN, vol. 53-A, no. 9, 1970 New York US
NITADORI: "Digital codings for continuous
sources based on weighted-meansquare error
criterion", pages 11-19
PROCEEDINGS OF THE NATIONAL
ELECTRONICS CONFERENCE, vol. 29, no. 29,
octobre 1974 CHICAGO US MELSA et al.:
"Sequential adaptive predictive coding of
speech" pages 412-415

(73) Titulaire: **SOCIETE ANONYME DE
TELECOMMUNICATIONS**
**40 avenue de New York**
**F-75116 Paris (FR)**

(72) Inventeur: **Cointot, Denis Francis**
**16, rue Larrey**
**F-75005 Paris (FR)**

(74) Mandataire: **Bloch, Robert et al,**
**39 avenue de Friedland**
**F-75008 Paris (FR)**

(56) Documents cités:
IEEE TRANSACTIONS ON COMMUNICATION
TECHNOLOGY, vol. COM-19, no. 4, août 1971
New York US J.F. HAYES: "Optimum prefiltering
and postfiltering of sampled wave-forms", pages
532-535
POLYTECHNISCH TIJDSCHRIFT, ed. E.
ELEKTROTECHNIEK-ELECTRONICA, vol. 27, no.
19, P.T. 13 septembre 1972 La Haye NL NOLL:
"Nonadaptive and adaptive differential pulse
code modulation of speech signals", pages 623-
629

Courier Press, Leamington Spa, England.

## Etage prédicteur pour système de compression de débit numérique

La présente invention concerne la transmission numérique d'informations codées en code MIC et plus particulièrement le traitement numérique permettant de réduire le débit numérique sur la ligne de transmission.

Les signaux susceptibles d'être traités par la système peuvent être des signaux téléphoniques tels que de parole, de données, de télégraphie harmonique, des signaux multifréquences etc... des signaux d'images, et d'une façon générale toutes les informations codées numériquement présentant une redondance.

Des systèmes de réduction de débits numériques sont déjà connus. Ils permettent une compression du débit numérique en exploitant, pour la transmission d'un échantillon du signal, la connaissance acquise lors de la transmission des échantillons précédents. Ils consistent habituellement en un ensemble de trois étages montés en cascade, le premier étage appelé étage prédicteur permettant de remplacer le signal MIC d'entrée par un signal $d_n$ représentant la différence entre le signal MIC d'entrée et la value prédite de cet échantillon calculée à partir des échantillons précédents, un second étage dit de compression automatique de gain dans lequel l'amplitude du signal différente $d_n$ issu du premier étage est divisée par un estimateur de la puissance moyenne. Un troisième étage appelé quantificateur effectue le codage des échantillons issus du 2ème étage et fournit en sortie un signal numérique à redondance réduite formé de mots de longueur fixe ou encore de longueur variable. Un dispositif équivalent en réception permet de reconstituer le signal MIC.

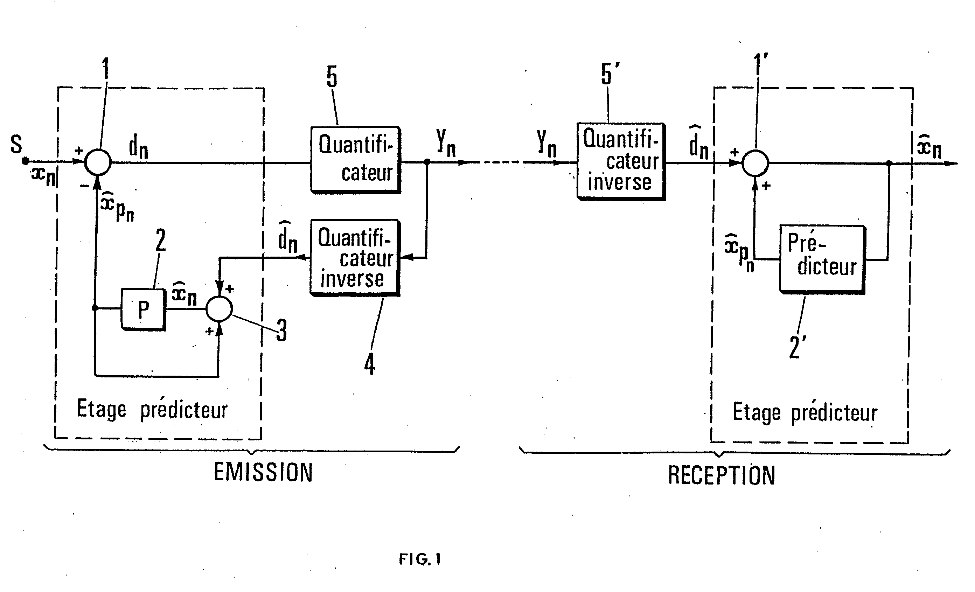

Ainsi en se référant à la figure 1, l'étage prédicteur de la partie émission des dispositifs connus de réduction numérique se compose habituellement d'un circuit additionneur-soustracteur 1 qui reçoit les échantillons $x_n$ du signal MIC S d'entrée et fournit en sortie un signal $d_n$ représentant la différence entre la valeur de l'echantillon $x_n$ entrant et l'echantillon $\hat{x}_{pn}$ prédit. Cet échantillon $\hat{x}_{pn}$ prédit est fourni par un prédicteur 2 à partir d'un échantillon $\hat{x}_n$ fourni par un circuit d'addition 3. Le prédicteur 2 est habituellement un prédicteur fixe, ou bien un prédicteur adaptatif comme dans le cas de la demande de brevet français antérieure 79 20 445 de la Demanderesse.

Le circuit d'addition 3 reçoit le $\hat{x}_{pn}$ prédit par le prédicteur 2 et l'additionne à l'échantillon $\hat{d}_n$ estimé fourni par un quantificateur inverse 4. L'échantillon différence $d_n$ fourni par le circuit d'addition 1 est appliqué à l'entrée d'un quantificateur 5 qui fournit en sortie des échantillons $y_n$ à débit réduit.

En réception, le signal $y_n$ reçu par le quantificateur 5' qui fournit un signal $\hat{d}_n$ différence à l'entrée d'un étage prédicteur. Cet étage prédicteur se compose essentiellement d'un circuit d'addition qui additionne le signal $\hat{d}_n$ différence issu du quantificateur inverse 5', avec l'échantillon $\hat{x}_{pn}$ fourni par le prédicteur 2.

Un signal $\hat{x}_n$ reconstitué est disponible à la sortie du circuit d'addition 1'. Ce signal $\hat{x}_n$ est, d'une part, appliqué à l'entrée du prédicteur 2', d'autre part, disponible à la sortie du dispositif de réduction de débit.

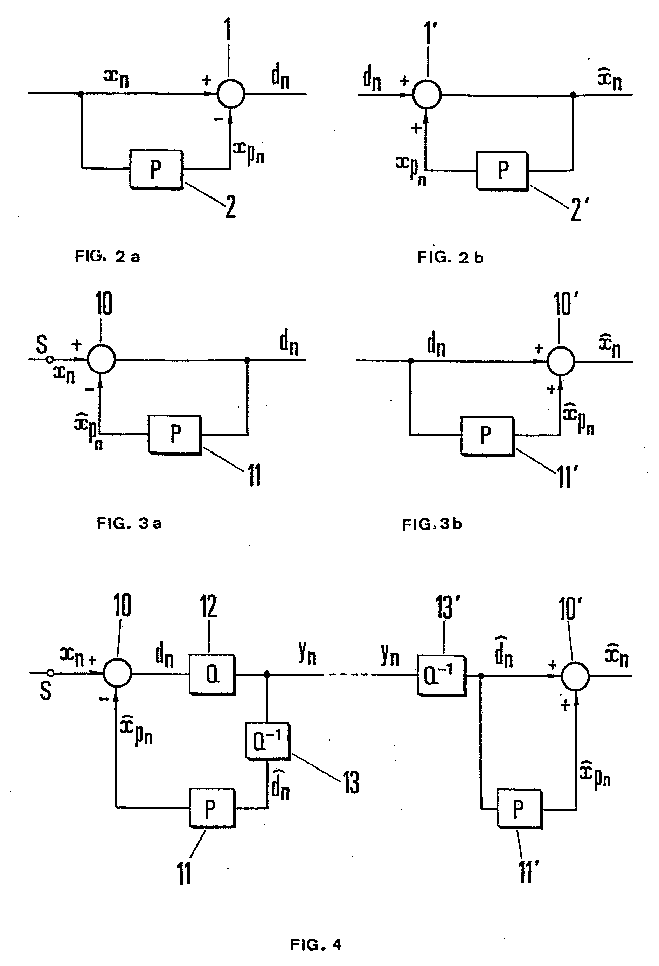

La figure 2a représente schématiquement l'étage prédicteur ainsi décrit de l'art antérieur quand on néglige le bruit apporté par le quantificateur. L'étage prédicteur se présente habituellement sous la forme d'un filtre transversal à l'émission réalisant une prédiction à partir du signal $x_n$ entrant et fournissant des échantillons $x_{pn}$ prédits à partir des échantillons précédents; à cet effet un prédicteur il fornit des coefficients $a_i$, fixes ou optimisés selon les systèmes, tels que

$$d_n = x_n - \sum_{i=1}^{N} a_i x_{n-i},$$

où N est le nombre de coefficients du prédicteur.

Lorsque les coefficients sont réactualisés par un algorithme quelconque, par exemple l'algorithme du gradient ou l'algorithme de Kalman, le dispositif de réduction de débit est, certes, mieux adapté aux statistiques différentes des signaux, mais, est instable en réception en présence d'erreurs de transmission.

En effet l'étage prédicteur réception des systèmes connus, comme celui de Nitadori, dans "Electronics and Communications in Japan", No. 9, 1970, et tel que représenté sur la figure 2b, recalcule le signal $\hat{x}_n$ à partir du signal erroné, $d_n$ par exemple, reçu. Les coefficients réactualisés utilisés par le prédicteur 2' sont alors erronés et le nouvel échantillon $\hat{x}_{n+1}$ est lui aussi erroné. L'erreur se propage dans le système, l'algorithme réactualisant les coefficients en réception diverge de celui du dispositif émission (fig. 2a) et peut entraîner des instabilités. Un tel phénomène s'explique mathématiquement en observant que la structure de l'étage prédicteur (fig. 2b) est récursive en réception et que la fonction de transfert du dispositif réception présente des pôles.

Une telle conception des étages prédicteur à l'émission et à la réception impose l'emploi de protections complexes en cas d'utilisation du système sur canal bruité.

L'objet de l'invention est de réaliser un dispositif de traitement numérique stable même en présence d'erreurs de transmission.

L'invention consiste à prévoir un système de traitement numérique comportant un étage prédicteur à structure récursive à l'émission et un étage prédicteur à structure transversale à la réception. Le prédicteur réception ayant alors une mémoire finie, le traînage de l'erreur est limité et n'affecte pas la convergence du système.

La présente invention concerne donc un étage prédicteur pour système de traitement numérique pour signaux résultant du codage en code MIC d'un signal de données, de parole, ou encore de signalisation multifréquence se présentant sous la forme d'une suite d'échantillons $x_n$, comprenant des premiers moyens d'émission pour former un échantillon $\hat{x}_{pn}$ prédit, des seconds moyens d'émission pour soustraire ledit échantillon $\hat{x}_{pn}$ prédit dudit échantillon $x_n$ entrant à l'émission afin d'en déduire un échantillon différence $d_n$ représentant l'erreur de prédiction, des premiers moyens de réception pour former un échantillon $\hat{x}_{pn}$ prédit des seconds moyens de réception pour additionner ledit échantillon $\hat{x}_{pn}$ prédit et un dit échantillon différence $d_n$ entrant à la réception, dispositif caractérisé par le fait que, à l'émission, chaque échantillon $\hat{x}_{pn}$ prédit est obtenu, par une structure récursive, à partir des échantillons $d_n$, $d_{n-1}$, $d_{n-2}$... etc... précédement obtenus à la sortie desdits seconds moyens d'émission, et, à la réception, chaque échantillon $\hat{x}_{pn}$ est obtenu, par une structure transversale, à partir des échantillons différence $d_n$, $d_{n-1}$..., précédemment reçus à l'entrée desdits seconds moyens de réception.

L'invention s'applique à tous les systèmes à prédiction linéaire par exemple à prédiction adaptative ou bien à prédiction fixe.

D'autres avantages et caractéristiques apparaîtront à la lecture de la description suivante illustrée par des dessins.

La figure 1 est une représentation schématique des dispositifs de réduction de débit numérique de l'art antérieur.

Les figures 2a et 2b représentent schématiquement la structure des étages, l'influence du quantificateur.

La figure 3 est une représentation schématique du dispositif de traitement numérique selon l'invention en négligeant l'influence du quantificateur.

La figure 4 est une représentation détaillée de l'étage prédicteur—de la figure 3, incluant le quantificateur dans la boucle de contre-réaction.

La figure 5 est une variante de réalisation de la partie émission de la figure 3.

La figure 6 est une schéma détaillé d'un étage prédicteur de la partie émission, variante de réalisation de la figure 3a.

La figure 7 est une variante de réalisation de la figure 6.

La figure 8 est une représentation détaillée du dispositif réception des figures 6 et 7.

Les étages prédicteurs émission et réception selon l'invention sont représentés schématiquement sur les figures 3a et 3b respectivement. En se référant à la figure 3a, le signal S entrant est un signal échantillonné et codé en code numérique. De chaque échantillon $x_n$ entrant on retranche un échantillon $\hat{x}_{pn}$ prédit fourni par un prédicteur il au moyen d'un circuit de soustraction 10 qui fournit des échantillons $d_n$ différence en sortie, représentatifs de la différence entre la valeur de l'échantillon entrant $x_n$ et de l'échantillon prédit $\hat{x}_{pn}$ fourni par le prédicteur il. Le prédicteur 11 reçoit selon l'invention à son entrée le signal différence $d_n$ émis en ligne et fournit le signal $\hat{x}_{pn}$ au circuit 10 de soustraction. Les signaux $d_n$ différence sont ainsi formés à partir des échantillons $d_{n-1}$ précédents selon la forme récurrente du type:

$$d_n = x_n - \sum_{i=1}^{N} a_i\, d_{n-i}$$

où $a_i$ sont les N coefficients fournis par le prédicteur 11.

Le prédicteur 11 peut être du type à coefficients $(a_i)$ fixes ou bien encore du type à coefficients $(a_i)_{i=1,N}$ optimisés. Dans ce dernier cas les coefficients sont réactualisés par exemple à chaque période d'échantillonnage selon l'algorithme du gradient ou encore selon l'algorithme de Kalman ou encore par tout algorithme bien connu de la technique.

Un tel étage prédicteur présente une structure récursive à l'émission. La fonction de transfert du dispositif émission est du type:

$$G_e(Z) = \frac{1}{1 + \sum_{i=1}^{N} a_i\, Z^{-i}}$$

où les $(a_i)_{i=1,N}$ sont les coefficients du prédicteur 11.

La figure 3b représente l'étage prédicteur du dispositif réception. Il consiste essentiellement en un prédicteur 11', identique à celui du dispositif émission, fournissent à partir du signal $d_n$ différence reçu, un signal prédit $\hat{x}_{pn}$, qui est additionné au signal $d_n$ au moyen d'un circuit d'addition 10', pour former le signal $\hat{x}_n$ reconstitué. Un tel étage prédicteur est à structure transversale. Il effecteur à la réception la prédiction à partir du signal différence $d_n$. Mais la fonction de transfert est du type

$$G_r(Z) = 1 + \sum_{i=1}^{N} a_i Z^{-1}$$

en réception et ne présente pas de pôle. Quelles que soient les valeurs des coefficients $a_i$ du prédicteur 11' réception, ce dispositif de réduction de débit numérique de l'invention sera stable car il disposera en réception d'un étage prédicteur à structure transversale. Donc même en présence d'erreurs de transmission le dispositif de l'invention sera stable. La figure 4 est une représentation plus complète des dispositifs émission et réception de traitement numériques des signaux codés selon l'invention. Le signal MIC entrant reçu par le circuit de soustraction 10 est transformé en un signal différence $d_n$ par soustraction du signal $\hat{x}_{pn}$ prédit par le prédicteur 11. Le signal différence $d_n$ issu du circuit d'addition 10 est transformé en un signal $y_n$ à faible débit au moyen d'un quantificateur 12 bien connu de la technique. Un tel quantificateur a déjà été décrit dans la demande de brevet francais 79 20 445 de la Demanderesse. Il consiste essentiellement à transformer les échantillons $d_n$ à grand débit en une suit d'échantillons $y_n$ à faible débit en fonction de la distribution de probabilité conditionnelle du signal $d_n$ à quantifier.

Le choix de la courbe de quantification adoptée, selon que le signal à traiter est un signal de données ou un signal de parole, peut, de la même façon que dans la demande précitée, être déterminé par la connaissance du vecteur das coefficients $(a_j)_{1<j<N}$ du prédicteur 11.

Un quantificateur inverse 13 disposé sur une boucle à contre-réaction reçoit à son entrée le signal $y_n$ émis en ligne et fournit un signal $\hat{d}_n$ identique à celui qui serait reçu en réception en l'absence d'erreurs de transmission. Cette grandeur $\hat{d}_n$ est appliquée à l'entrée du prédicteur 11.

En réception le signal $y_n$ à faible débit est reçu par le quantificateur inverse 13' qui fournit en sortie un signal $\hat{d}_n$ différence. Ce signal $\hat{d}_n$ différence est appliqué, d'un part, à l'entrée du prédicteur 11', d'autre part, à l'entrée du circuit d'addition 10'.

Ce circuit d'addition 10' additionne le signal $\hat{d}_n$ issu du quantificateur inverse 13' au signal $\hat{x}_{pn}$ prédit fourni par le prédicteur 11', et fournit en sortie un signal $\hat{x}_n$ reconstitué de débit égal à celui du signal S d'entrée.

Les prédicteurs 11 et 11' des dispositifs émission et réception peuvent, par exemple, être des prédicteurs adaptatifs appliquant l'algorithme du gradient. On a alors une relation récurrente reliant les N coefficients A (n), permettant de les réactualiser.

$$A (n+1)=A (n)+K (n)$$

où

$$A (n)=[a_1(n)\text{---}a_N(n)]$$

est le vecteur des coefficients, et où K (n) représente le vecteur de correction à l'instant n.K (n) peut être calculé par tout algorithme utilisé dans les techniques de prédiction, par exemple l'algorithme du graident, l'algorithme de Kalman ou autres.

Toutefois, afin d'éviter toute instabilité en émission et d'assurer une convergence des dispositifs émission et réception, en particulier des étages prédicteurs émission et réception, ou a joute un terme $(1-\beta)$ de fuite à l'aigorithme de réactualisation des coefficients, $\beta$ étant une constante de l'ordre de $10^{-3}$. La relation de réactualisation des coefficients s'écrit alors:

$$A (n+1)=(1-\beta)[A (n)+K (n)]$$

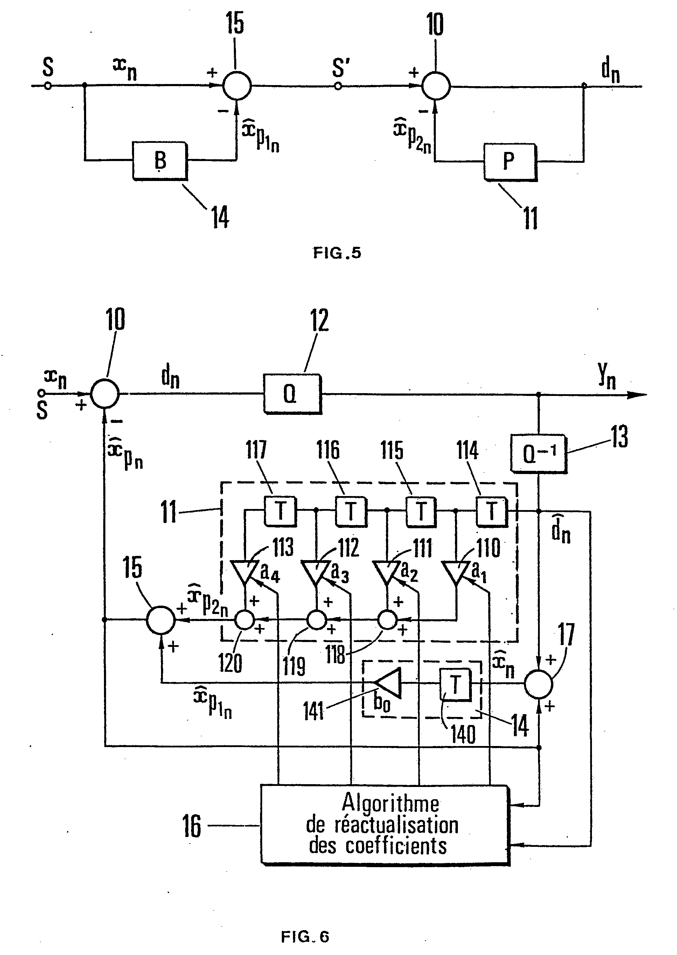

La figure 5 représente une variante de réalisation de l'invention permettant d'améliorer la prédiction pour les signaux de parole. On dispose un filtre 14 à l'entrée de l'étage prédicteur émission qui effectue un préfiltrage favorisant la prédiction du système selon l'invention.

Ce filtre 14 reçoit le signal S entrant formé des échantillons $x_n$ et introduit un retard T d'une période d'échantillonnage, retard équivalent à celui d'un prédicteur classique fixe du premier ordre optimisé pour la parole. Le signal $\hat{x}_{pln}$ fourni par le filtre 14 est soustrait du signal $x_n$ au moyen du circuit de soustraction 15. Le signal S' fourni à la sortie de ce circuit de soustraction 15 est un signal de même débit que S mais présentant une minimisation en énergie pour els fréquences basses de parole.

Ce signal S' est ensuite traité de la même façon que dans les dispositifs de l'invention décrits à l'aide des figures 3a et 4. En effet un prédicteur 11 du type connu en soi, par exemple adaptatif fonctionnant selon l'algorithme du gradient ainsi que décrit dans la demande de brevet francais 79 20 445 de la Demanderesse, fournit une prédiction à partir des signaux $d_n$ différence fournis par les échantillons précédents à la sortie du circuit de soustraction 10.

Le prédicteur 11 fournit à sa sortie un signal prédit $\hat{x}_{p2n}$ qui est soustrait de l'échantillon $x'_n$ contenu dans le signal S'.

Les échantillons $d_n$ différence fournis à la sortie de l'étage prédicteur émission de la figure 5 permettent de conserver des performances peu altérées pour les signaux de données et d'obtenir pour les signaux de parole un gain comparable à celui obtenu à la sortie d'un prédicteur adaptatif à même nombre de coefficients.

Une représentation détaillée du dispositif de traitement numérique émission selon l'invention et en particulier de son étage prédicteur est illustrée sur la figure 6. Le circuit de soustraction 10 fournit, à partir des échantillons $x_n$ entrants et des échantillons $\hat{x}_{pn}$ prédits, des échantillons $d_n$ différence représentatifs de la différence entre la valeur de l'échantillon $x_n$ entrant et de l'échantillon $\hat{x}_{pn}$ prédit. Cet échantillon $d_n$ sortant est transformé en un signal $y_n$ à faible débit au moyen d'un quantificateur 12 bien connu de la technique. Un quantificateur inverse 13 disposé sur une boucle à contre-réaction reçoit à son entrée le signal $y_n$ émis en ligne et fournit en sortie un signal $\hat{d}_n$ identique à celui qui serait reçu en réception en l'absence d'erreurs de transmission. Ce signal $\hat{d}_n$ est appliqué, d'une part, à l'entrée du prédicteur 11, d'autre part, à l'entrée du dispositif 16 de calcul permettant de reactu- aliser les coefficients $(a_i)_{1 \leqslant i \leqslant 4}$ du prédicteur 11. Ce dispositif 16 est bien connu de l'état de la technique, il applique l'algorithme du gradient ou encore l'algorithme de Kalman ou encore tout algorithme connu en soi. Ce dispositif 16 fournit les 4 coefficients $a_1$, $a_2$, $a_3$, $a_4$ dans l'exemple de réalisation de la figure 6 au prédicteur 11, à l'entrée des quatre circuits de multiplication 110, 111, 112, 113. Chacun de ces circuits de multiplication 110, 111, 112, 113 reçoit le signal $\hat{d}_n$ fourni par le quantificateur inverse 13 respectivement retardé d'un temps T, 2T, 3T et 4T au moyen de quatre registres à décalage 114, 115, 116, 117 respectivement. Les deux signaux obtenus en sortie des circuits de multiplication 110, 111, sont appliqués à l'entrée d'un circuit d'addition 118. Le résultat obtenu à la sortie de ce circuit d'addition 118 est additionnée avec le résultat du circuit 112 de multiplication au moyen du circuit d'addition 119. Le résultat obtenu a la sortie du circuit 119 d'addition est appliqué à l'entrée du circuit 120 d'addition au moyen duquel il est additionné avec le résultat obtenu à la sortie du circuit de multiplication 113. Le résultat obtenu à la sortie du circuit d'addition 120 est un signal $\hat{x}_{p2n}$ prédit. Cette prédiction est améliorée selon l'invention en insérant un filtre transversal 14 constitué d'un registre à décalage 140 suivi d'un circuit 141 de multiplication. A cet effet un circuit d'addition 17 additionne l'échantillon $\hat{x}_{pn}$ prédit, fourni à l'entrée du circuit d'addition 10, à l'échantillon $\hat{d}_n$ obtenu à la sortie du quantificateur inverse 13 pour former l'échantillon $\hat{x}_n$ reconstitué. C'est cet échantillon $\hat{x}_n$ qui est successivement retardé d'un temps T au moyen du registre à décalage 140 puis multiplié par un coefficient fixe $b_o$ au moyen du circuit de multiplication 141. L'échantillon $\hat{x}_{p1n}$ fourni à la sortie du filtre transversal 14 est additionné avec l'echantillon $\hat{x}_{p2n}$ prédit fourni par le prédicteur 11 au moyen du circuit d'addition 15. A la sortie du circuit d'addition 15 on obtient un échantillon $\hat{x}_{pn}$ prédit qui est utilisé à l'entrée du circuit d'addition 10.

Les échantillons $d_n$ fournis à la sortie du circuit d'addition 10 sont transformés en un signal à faible débit d'échantillons $y_n$ au moyen du quantificateur 12.

Dans ce cas de figure, si les niveaux de quantification sont suffisamment fins (le nombre de bits des mots du signal $y_n$ est supérieur ou égal à 3 bits), et si le quantificateur n'écrête pas le signal, le bruit de quantification induit est blanc.

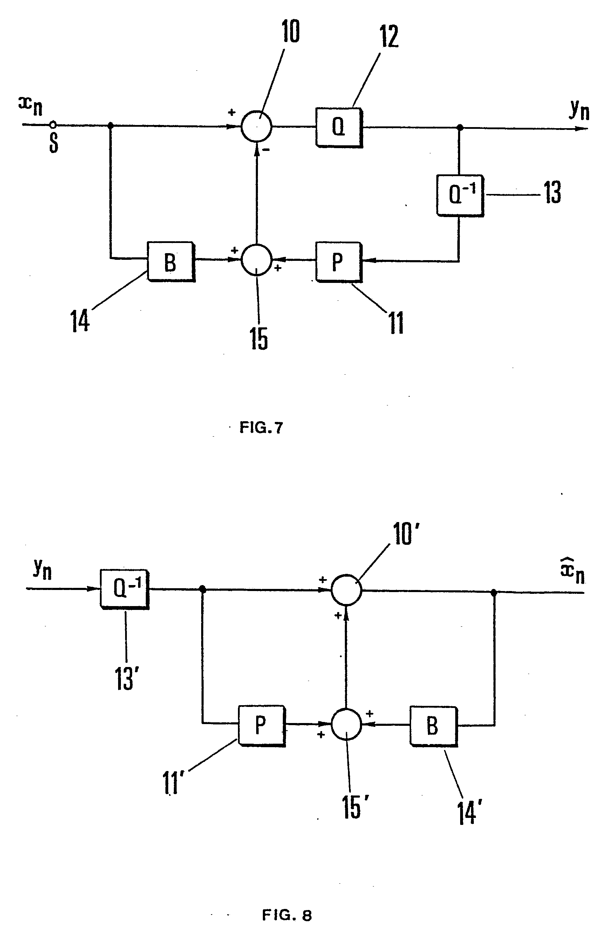

En se référant à la figure 7, un autre mode d'insertion du filtre transversal 14 est prévu selon l'invention. L'opération de préfiltrage est effectué directement à l'entrée de l'étage prédicteur émission, à partir des échantillons $x_n$ entrants et non plus à partir d'échantillons $\hat{x}_n$ reconstituées. Le filtre 14 fournit des échantillons, en sortie, qui sont additionnés avec les échantillons prédits, issus du prédicteur 11, au moyen d'un circuit d'addition 15. L'échantillon issu du circuit 15 est appliqué à l'entrée du circuit de soustraction 10 pour y être retranché de l'échantillon $x_n$ entrant. L'échantillon $d_n$ issu du circuit de soustraction 10 est appliqué à l'entrée du quantificateur 12. Sur la boucle de contre-réaction à partir des échantillons $y_n$, le quantificateur inverse 13 fournit des échantillons $d_n$ reconstituées à l'entrée du prédicteur 11. Le prédicteur 11 associé à son dispositif de réactualisation des coefficients, non représenté, fournit des échantillons prédits à chaque instant à l'entrée du circuit d'addition 15. Un tel mode d'insertion du filtre transversal 14, en dehors de la boucle de contre-réaction sur laquelle est inséré le quantificateur inverse procure un bruit plus coloré de fonction de transfert s'écrivant

$$\frac{1}{1-Bo \ (z)}$$

(bruit blanc filtré par le prédicteur fixe) ce que peut être intéressant subjectivement dans le cas du traitement de parole.

La figure 8 représente schématiquement les dispositifs réception correspondant aux dispositifs émission des figures 6 et 7. Le signal $y_n$ entrant est appliqué à l'entrée du quantificateur inverse 13' qui fournit en sortie des échantillons a l'entrée du circuit d'addition 10' et à l'entrée du prédicteur 11'. Ce prédicteur 11' associé à son dispositif de réactualisation des coefficients, non représenté sùr la figure, fournit à l'entrée du circuit d'addition 15' des échantillons prédits $x_{pn}$ qui sont additionnés avec les échantillons fournis par le filtre transversal 14'. L'opération de préfiltrage effectuée par ce filtre 14' est effectuée à partir de l'échantillon $\hat{x}_n$ reconstitué fourni à la sortie du circuit d'addition 10'. Le circuit d'addition 15' fournit en sortie des échantillons qui sont additionnés avec ceux issus du quantificateur inverse 13' au moyen du circuit d'addition 10'.

**Revendications**

1. Etage prédicteur pour système de traitement numérique pour signaux résultant du codage en code MIC d'un signal de données, de parole, ou encore de signalisation multifréquence se présentant sous la forme d'une suite d'échantillons $x_n$, comprenant des premiers moyens d'émission (11) pour former un échantillon $\hat{x}_{pn}$ prédit, des seconds moyens d'émission (10) pour soustraire ledit échantillon $\hat{x}_{pn}$ prédit dudit échantillon $x_n$ entrant a l'emission afin d'en déduire un échantillon différence $d_n$ représentant l'erreur de prédiction, des premiers moyens de réception (11') pour former un échantillon $\hat{x}_{pn}$ prédit et des seconds moyens de réception (10') pour additionner ledit échantillon $\hat{x}_{pn}$ prédit et un dit échantillon différence $d_n$ entrant à la réception, dispositif caractérisé par le fait que, à l'émission, chaque échantillon $\hat{x}_{pn}$ prédit est obtenu, par une structure récursive, à partir des échantillons $d_n$, $d_{n-1}$, $d_{n-2}$... etc... précédement obtenus à la sortie desdits seconds moyens d'émission (10), et, à la réception, chaque échantillon $\hat{x}_{pn}$ est obtenu, par une structure transversale, à partir des échantillons différence $d_n$, $d_{n-1}$..., précédemment reçus à l'entrée desdits seconds moyens de réception (10').

2. Etage prédicteur pour système de traitement numérique selon la revendication 1, caractérisé par le fait que les dits premiers moyens d'émission (11) se composent essentiellement d'un prédicteur fixe connu en soi, optimisé pour les signaux S entrants.

3. Etage prédicteur pour système de traitement numérique selon la revendication 1, caractérisé par le fait que les dits premiers moyens d'émission (11) et de réception (11') contiennent un prédicteur adaptatif à coefficients réactualisés à chaque période d'échantillonnage, par exemple selon tout algorithme de calcul connu en soi.

4. Etage prédicteur pour système de traitement numérique selon l'une des revendications 1 à 3, caractérisé par le fait qu'il comporte un quantificateur (12) connu en soi pour transformer les échantillons $d_n$, $d_{n-1}$, $d_{n-2}$, obtenus à l'émission, en un signal à faible débit.

5. Etage prédicteur pour système de traitement numérique selon l'une des revendications 1 à 4, caractérisé par le fait qu'à l'émission, les échantillons $x_n$, à l'entrée desdits seconds moyens d'émission (10), sont additionnés avec les échantillons $x_n$ préalablement traités par un filtre transversal (14) effectuant un préfiltrage, et à la réception, les échantillons $\hat{x}_{pn}$ reconstitués sont additionnés avec les échantillons $\hat{x}_n$ préalablement traités par un filtre transversal (14') identique.

6. Etage prédicteur pour système de traitement numérique selon l'une des revendications 1 à 4, caractérisé par le fait qu'on dispose à l'émission, sur la boucle de contre-réaction, comportant lesdits premiers moyens d'emission (11) pour former un échantillon $\hat{x}_{pn}$ prédit, un filtre transversal (14) effectuant un préfiltrage à partir des échantillons $\hat{x}_n$ reconstituées, et, à la réception, les échantillons $\hat{x}_{pn}$ reconstitués sont additionnés avec les échantillons $\hat{x}_n$ préablement traités par un filtre transversal (14') identique.

## Patentansprüche

1. Prediktorstufe für ein System zur numerischen Bearbeitung von durch Kodierung eines Daten- oder Sprechsignals oder auch eines Mehrfrequenzsignals im MIC-Kode erhaltenen Signalen, welche in Form einer Folge von Impulsmustern $x_n$ vorliegen, mit ersten Sendemitteln (11) zur Erzeugung eines vorhergesagten Impulsmusters $\hat{x}_{pn}$, zweiten Sendemitteln (10) zum Subtrahieren des genannten vorhergesagten Impulsmusters $\hat{x}_{pn}$ vom genannten zum Senden einlangenden Impulsmuster $x_n$, um ein den Vorhersagefehler darstellendes Differenzimpulsmuster $d_n$ abzuleiten, mit ersten Empfangsmitteln (11') zur Erzeugung eines vorhergesagten Impulsmusters $\hat{x}_{pn}$ sowie zweiten Empfangsmitteln (10') zum Addieren des genannten vorhergesagten Impulsmusters $\hat{x}_{pn}$ und eines zum Empfang einlangenden Differenzimpulsmusters $d_n$, dadurch gekennzeichnet, daß sendeseitig jedes vorhergesagte Impulsmuster $\hat{x}_{pn}$ durch eine Rekursivstruktur aus vorhergehend am Ausgang der genannten zweiten Sendemittel (10) erhaltenen Impulsmustern $d_n$, $d_{n-1}$, $d_{n-2}$... usw. erhalten wird, und empfangsseitig jedes Impulsmuster $\hat{x}_{pn}$ durch eine Transversalstruktur aus vorhergehend am Eingang der genannten zweiten Empfangsmittel (10') ampfangenen Impulsmustern $d_n$, $d_{n-1}$... erhalten wird.

2. Prediktorstufe für eine System zu numerischen Bearbeitung nach Anspruch 1, dadurch gekennzeichnet, daß die genannten ersten Sendemittel (11) im wesentlichen aus einem an sich bekannten festen Prediktor bestehen, der für die Eingangssignale S optimiert ist.

3. Prediktorstufe für ein System zur numerischen Bearbeitung nach Anspruch 1, dadurch gekennzeichnet, daß die genannten ersten Sendemittel (11) und Empfangsmittel (11') einen anpassbaren Prediktor enthalten, mit Koeffizienten die bei jeder Abtastperiode, beispielsweise nach irgnedeinem an sich bekannten Rechnungsalgorithmusreaktualisiert werden.

4. Prediktorstufe für ein System zur numerischen Bearbeitung nach einem der Ansprüche 1 bis 3, dadurch gekennzeichnet, daß sie einen an sich bekannten Quantisierer (12) zur Umwandlung der beim Senden erhaltenen Impulsmuster $d_n$, $d_{n-1}$, $d_{n-2}$ in ein Signal schwacher Leistung enthält.

5. Prediktorstufe für ein System zur numerischen Bearbeitung nach einem der Ansprüche 1 bis 4, dadurch gekennzeichnet, daß sendeseitig die Impulsmuster $x_n$ bei Zuführung zu den genannten zweiten Sendemitteln (10) mit den davor durch ein eine Vorfilterung bewirkendes Transversalfilter (14) behandelten Impulsmustern $x_n$ addiert werden, und daß beim Empfang die wiederhergestellten Impulsmuster $\hat{x}_{pn}$, mit den davor durch ein identisches Transversalfilter (14') behandelten Impulsmustern $\hat{x}_n$ addiert werden.

6. Prediktorstufe für ein System zur numerischen Bearbeitung nach einem der Ansprüche 1 bis 4, dadurch gekennzeichnet, daß sendeseitig in der die genannten ersten Sendemittel (11) zur Erzeugung eines vorhergesagten Impulsmusters $\hat{x}_{pn}$ aufweisenden Gegenkopplungsschleife ein Transversalfilter (14) angeordnet ist, das ausgehend von den wiederhergestellten Impulsmustern $\hat{x}_n$ eine Vorfilterung durchführt, und daß empfangsseitig die wiederhergestellten Impulsmuster $\hat{x}_{pn}$ mit den davor

durch ein identisches Transversalfilter (14') behandelten Impulsmustern $\hat{x}_n$ addiert werden.

## Claims

1. Predictor stage for digital processing system for signals resulting from a PCM coded data, voice or multifrequency signalisation signal, in the form of a sequence of samples $x_n$, comprising first transmission means (11) for forming a predicted sample $\hat{x}_{pn}$ second transmission means (10) for subtracting said predicted sample $\hat{x}_{pn}$ from said sample $x_n$ coming in at the transmission side, and deriving therefrom a difference sample $d_n$ representing the prediction error, first reception means (11') for forming a predicted sample $\hat{x}_{pn}$ and second reception means (10') for additing said predicted sample $\hat{x}_{pn}$ and one said difference sample $d_n$ coming in at the reception side, device characterized in that, at the transmission side, each predicted sample $\hat{x}_{pn}$ is derived, by a recursive structure, from the samples $d_n$, $d_n-1$, $d_n-2$... etc. previously obtained at the output of said second transmission means (10), and, at the reception side, each sample $\hat{x}_{pn}$ is derived, by a transverse structure, from the difference samples $d_n$, $d_n-1$... previously received at the input of said second reception means (10').

2. Predictor stage for digital processing system as claimed in claim 1, characterized in that said first transmission means (11) substantially comprises a fixed predictor known per se, optimized for the incoming S signals.

3. Predictor stage for digital processing system as claimed in claim 1, characterized in that said first transmission (11) and reception (11') means comprise an adaptive predictor with coefficients reactualized at each sampling period, for instance according to any computation algorithm known per se.

4. Predictor stage for digital processing system as claimed in one of claims 1 to 3, characterized in that it comprises a quantizer (12), known per se, for converting the samples $d_n$, $d_n-1$, $d_n-2$ obtained at the transmission side, into a low rate signal.

5. Predictor stage for digital processing system as claimed in any one of claims 1 to 4, characterized in that at the transmission side the samples $x_n$, at the input of said second transmission means (10), are added to the samples $x_n$ previously processed by a transverse filter (14) achieving a prefiltering and, at the reception side, the reconstructed samples $\hat{x}_{pn}$ are added to the samples $\hat{x}_n$ previously processed by an identical transverse filter (14').

6. Predictor stage for digital processing system as claimed in one of claims 1 to 5, characterized in that a transverse filter (14) is disposed at the transmission side on the negative feedback loop, comprising said first transmission means (11) for forming a predicted sample $\hat{x}_{pn}$, achieving a prefiltering from the reconstructed sample $\hat{x}_n$ and, at the reception side, the reconstructed samples $\hat{x}_{pn}$ are added to the samples $\hat{x}_n$ previously processed by an identical transverse filter (14').

$\hat{x}_n$

Prédicteur

$2'$

$\hat{x}p_n$

$1'$

$\hat{d}_n$

Quantificateur
inverse

$5'$

$Y_n$

Etage prédicteur

RECEPTION

$Y_n$

Quantificateur

5

Quantificateur
inverse

4

$\hat{d}_n$

$\hat{x}_n$

3

P

2

$\hat{x}p_n$

$d_n$

1

$x_n$

S

Etage prédicteur

EMISSION

FIG.1

FIG. 2 a

FIG. 2 b

FIG. 3 a

FIG. 3 b

FIG. 4

FIG.5

FIG. 6

FIG. 7

FIG. 8

4